(19) Europäisches Patentamt
European Patent Office
Office européen des brevets

(11) **EP 4 685 461 A1**

(12) **EUROPEAN PATENT APPLICATION**

(43) Date of publication:
**28.01.2026 Bulletin 2026/05**

(21) Application number: **25189836.7**

(22) Date of filing: **16.07.2025**

(51) International Patent Classification (IPC):
**G01N 15/04** (2006.01)   **G01N 15/10** (2024.01)
**G01N 15/14** (2024.01)   **G01N 15/1434** (2024.01)

(52) Cooperative Patent Classification (CPC):
**G01N 15/1434; G01N 15/1433;** G01N 2015/1006;
G01N 2015/144; G01N 2015/1452;
G01N 2015/1486

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **23.07.2024 JP 2024117955**

(71) Applicant: **FUJIFILM Corporation**
**Tokyo 106-8620 (JP)**

(72) Inventors:
• **Kasai, Yusuke**
  **Kanagawa, 258-8577 (JP)**
• **Morimoto, Takashi**
  **Kanagawa, 258-8577 (JP)**
• **Oba, Takahiro**
  **Kanagawa, 258-8577 (JP)**

(74) Representative: **Hoffmann Eitle**
**Patent- und Rechtsanwälte PartmbB**
**Arabellastraße 30**
**81925 München (DE)**

(54) **OBSERVATION APPARATUS AND OBSERVATION METHOD**

(57)     Provided are an observation apparatus and an observation method capable of selectively observing target particles as an observation target among two or more kinds of particles included in a suspension.

An observation apparatus includes: a holding unit that holds a suspension in a state of being separated into a target layer including target particles as an observation target among two or more kinds of particles included in the suspension and a non-target layer including particles other than the target particles among the two or more kinds of particles, the suspension including the two or more kinds of particles having different relative magnitudes of specific gravity with respect to a liquid; an observation light source that causes observation light to be incident from a side of the target layer; an objective lens that is provided on the side of the target layer and magnifies an image of the target particles; and an imaging unit that captures the image of the target particles magnified by the objective lens. A depth of field of an optical system including the objective lens is smaller than a thickness of the target layer.

**EP 4 685 461 A1**

**Description**

**BACKGROUND OF THE INVENTION**

1. Field of the Invention

The disclosed technology relates to an observation apparatus and an observation method.

2. Description of the Related Art

The following technologies are known as technologies related to cell observation. For example, JP2012-021828A describes a cell detection method in which a cell suspension containing cells is poured into a storage tank so that the cell suspension is an upper layer and a second liquid having a specific gravity higher than that of the cell suspension and the cells is a lower layer, an interface between the cell suspension and the second liquid is imaged from above the storage tank, and the presence and/or absence or the number of rare cells included in the cells is detected from an image obtained by the imaging.
JP2006-094783A describes a cell observation apparatus that constantly observes a capture chip having a through-hole for capturing cells in a cell suspension. The cell observation apparatus includes an image processing device including a light source and an objective lens.
JP1988-233371A (JP-S63-233371A) describes a device including a flow system that sends a suspension containing cells to a light irradiation site, a fluorescence-measurement optical system that irradiates individual cells flowing through the flow system with light to measure fluorescence intensity, and an information processing system that detects a signal from the fluorescence-measurement optical system and generates a signal for sorting and collecting the cells.

**SUMMARY OF THE INVENTION**

Various treatment methods have been developed with the development of regenerative medicine research in recent years. In a treatment method in the field of regenerative medicine, a treatment is performed in which a biological tissue collected from a patient is decomposed by an enzymatic treatment or the like to extract cells, the number of the extracted cells is counted, and the cells are seeded and cultured at a desired concentration. The counting of the number of cells is often performed in the microscope observation with a bright field using white light. However, in a case where fat is included in the biological tissue, it is difficult to distinguish between the cells and the lipid droplets in the microscope observation with a bright field, and it is difficult to accurately count the number of cells. Although it is also conceivable to separate the cells and the fat by centrifugation and remove the fat, there is a risk of cell damage during centrifugation and a risk of cell loss in a case where the fat is removed.
The disclosed technology has been made in view of the above points, and an object of the present invention is to provide an observation apparatus and an observation method that can selectively observe target particles as an observation target among two or more kinds of particles included in a suspension.
An observation apparatus according to the disclosed technology includes: a holding unit that holds a suspension in a state of being separated into a target layer including target particles as an observation target among two or more kinds of particles included in the suspension and a non-target layer including particles other than the target particles among the two or more kinds of particles, the suspension including the two or more kinds of particles having different relative magnitudes of specific gravity with respect to a liquid; an observation light source that causes observation light to be incident from a side of the target layer; an objective lens that is provided on the side of the target layer and magnifies an image of the target particles; and an imaging unit that captures the image of the target particles magnified by the objective lens. A depth of field of an optical system including the objective lens is smaller than a thickness of the target layer.
The observation light source may output excitation light for exciting a fluorophore introduced into the target particles. The observation apparatus may have a filter that is provided between the objective lens and the imaging unit, blocks a wavelength component of the excitation light, and transmits a wavelength component of the fluorescence emitted from the target particles. An angle between an optical axis of the observation light and an optical axis of the objective lens may be greater than 0° and smaller than 90°.
The holding unit may include a pair of parallel flat plates having light transmittance and having main surfaces extending in a horizontal direction, and the suspension may be held between the pair of parallel flat plates.
The observation apparatus may include an imaging lens that forms the image of the target particles magnified by the objective lens on an imaging surface of the imaging unit and has a magnification of $1\times$ or less.
The observation apparatus may include a counting unit that counts the number of the target particles imaged by the imaging unit.
The target particles may be cells.

An observation method according to the disclosed technology includes: holding a suspension in a state of being separated into a target layer including target particles as an observation target among two or more kinds of particles included in the suspension and a non-target layer including particles other than the target particles among the two or more kinds of particles, the suspension including the two or more kinds of particles having different relative magnitudes of specific gravity with respect to a liquid; causing observation light to be incident from a side of the target layer; magnifying an image of the target particles with an objective lens that is provided on the side of the target layer; and capturing the image of the target particles magnified by the objective lens. A depth of field of an optical system including the objective lens is smaller than a thickness of the target layer.

The target particles may be cells.

According to the disclosed technology, there are provided an observation apparatus and an observation method that can selectively observe target particles as an observation target among two or more kinds of particles included in a suspension.

## BRIEF DESCRIPTION OF THE DRAWINGS

Fig. 1 is a diagram schematically showing an example of a configuration of an observation apparatus according to an embodiment of the disclosed technology.
Fig. 2 is a cross-sectional view showing an example of a configuration of a holding unit according to the embodiment of the disclosed technology.
Fig. 3 is a diagram showing an example of frequency characteristics of a multiband filter according to the embodiment of the disclosed technology.
Fig. 4 is a diagram showing a relationship between a depth of field in an observation optical system 40 and a thickness of a target layer.
Fig. 5A is an image of cells included in a cell suspension acquired by using an observation apparatus according to a comparative example.
Fig. 5B is an image of cells included in a cell suspension acquired by using the observation apparatus according to the embodiment of the disclosed technology.
Fig. 6 is a diagram showing an example of a configuration of an observation apparatus according to another embodiment of the disclosed technology.

## DESCRIPTION OF THE PREFERRED EMBODIMENTS

An example of embodiments of the disclosed technology will be described below with reference to the drawings. In addition, the same or equivalent components and parts in each drawing are given the same reference numerals, and duplicated descriptions will be omitted.

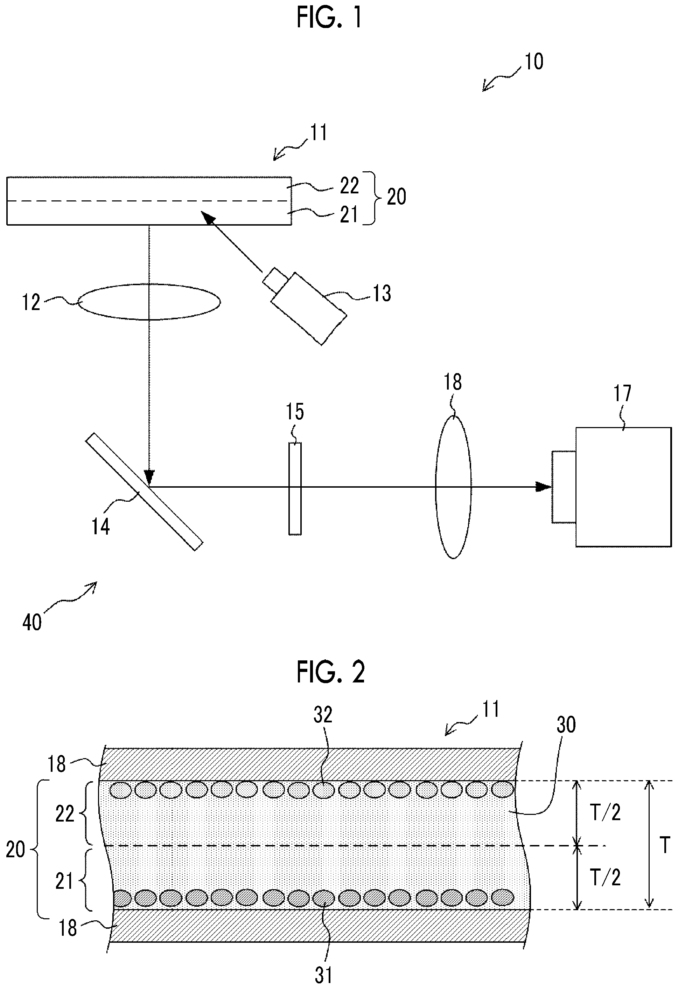

Fig. 1 is a diagram schematically showing an example of a configuration of an observation apparatus 10 according to an embodiment of the disclosed technology. The observation apparatus 10 includes a holding unit 11, an observation light source 13, a mirror 14, a filter 15, an imaging lens 16, and an imaging unit 17. The observation optical system 40 is configured with the observation light source 13, the mirror 14, the filter 15, the imaging lens 16, and the imaging unit 17. The observation apparatus 10 is used for observing particles included in a suspension 20 held by the holding unit 11. The particle as an observation target is, for example, a cell. The cell may be a single cell or may have a form of a colony or spheroid in which a plurality of cells are aggregated.

Fig. 2 is a cross-sectional view showing an example of a configuration of the holding unit 11. The holding unit 11 is a member for holding the suspension 20 including particles (hereinafter, referred to as target particles 31) as an observation target. The suspension 20 also includes particles other than the target particles 31 (hereinafter, referred to as non-target particles 32). The target particles 31 and the non-target particles 32 have different relative magnitudes of specific gravity with respect to a liquid (medium) 30 contained in the suspension 20. That is, one of the target particles 31 and the non-target particles 32 has a specific gravity lower than that of the liquid 30, and the other has a specific gravity higher than that of the liquid 30. In the following, a case where the non-target particles 32 have a specific gravity lower than that of the liquid 30 and the target particles 31 have a specific gravity higher than that of the liquid 30 will be described as an example. The suspension 20 is, for example, a cell suspension, the target particles 31 are, for example, cells, the non-target particles 32 are, for example, fat (oil droplets), and the liquid 30 is, for example, a culture medium.

The suspension 20 is held in the holding unit 11 in a state of being separated into a target layer 21 including the target particles 31 and a non-target layer 22 including the non-target particles 32. After the suspension 20 is accommodated in the holding unit 11, the non-target particles 32 float due to buoyancy and the target particles 31 are precipitated due to gravity by allowing the suspension 20 to stand. As a result, the suspension 20 is separated into the target layer 21 including the target particles 31 and the non-target layer 22 including the non-target particles 32. The target layer 21 is disposed on the lower side in the vertical direction, and the non-target layer 22 is disposed on the upper side in the vertical direction. The holding unit 11 is configured to include a pair of parallel flat plates 18 having light transmittance and having main surfaces extending in the horizontal direction. The suspension 20 is held between the pair of parallel flat plates 18. In a case where a distance between the parallel flat plates is defined as T, the thicknesses of the target layer 21 and the non-target layer 22 are defined as T/2, respectively.

An observation optical system 40 including the observation light source 13, the mirror 14, the filter 15, the imaging lens 16, and the imaging unit 17 is provided on the side of the target layer 21. The objective lens 12 is set to focus on the target layer 21 and magnifies the image of the target particles 31. The observation light source 13 causes observation light for observing the target particles 31 to be incident from the side of the target layer 21. The observation light source 13 is installed such that an angle between an optical axis of the observation light and an optical axis of the objective lens 12 is greater than 0° and smaller than 90°. This means that the optical axis of the observation light is not coaxial with the optical axis of the objective lens 12 directed in the vertical direction, and the observation light is incident from the side of the target layer 21. Since the optical axis of the observation light is not coaxial with the optical axis of the objective lens 12, the degree of freedom in disposing the observation light source 13 can be increased. For example, as shown in Fig. 1, it is possible to irradiate the target layer 21 with observation light from a short distance. As a result, it is possible to obtain a clearer image of the target particles 31.

The target particles 31 are irradiated with the observation light from the side of the target layer 21. Reflected light, fluorescence, or fluorophoreescence is emitted from the target particles 31 in response to the observation light. The reflected light, fluorescence, or fluorophoreescence emitted from the target particles 31 is incident on the objective lens 12. In a case where fluorescence observation is performed on the target particles 31, the target particles 31 are subjected to fluorescence staining using a fluorescent reagent. In this case, the observation light source 13 that outputs excitation light for exciting the fluorophore introduced into the target particles 31 is used.

In a case where the target particles 31 are cells, a fluorescent reagent having a function of selectively staining the cell with fluorescence is used. The fluorescent reagent may include, for example, acridine orange (AO) and 4',6-diamidino-2-phenylindole (DAPI). AO is used for staining all cells, and DAPI is used for staining dead cells. The fat (oil droplet) which is the non-target particles 32 is not stained with the fluorescent reagent. For the cell which is the target particles 31 stained with AO, for example, a blue light source having a wavelength of approximately 470 nm can be used as the excitation light. For the cell which is the target particles 31 stained with DAPI, for example, ultraviolet light having a wavelength of approximately 365 nm can be used as the excitation light. The observation apparatus 10 may comprise two or more observation light sources 13 that output beams of excitation light of different wavelengths.

The light transmitted through the objective lens 12 is incident on the filter 15 after the traveling direction is bent by 90° by the mirror 14. The filter 15 has a function of selectively allowing a wavelength component of fluorescence emitted from the target particles 31 to pass. That is, the filter 15 has a characteristic of blocking a wavelength component of the excitation light and allowing transmission of a wavelength component of the fluorescence emitted from the target particles 31. In a case where the observation apparatus 10 comprises two or more observation light sources 13 that output beams of excitation light of different wavelengths and two or more kinds of fluorescence components having wavelengths different from each other are emitted from the target particles 31, a multiband filter having a plurality of transmission bands is used as the filter 15.

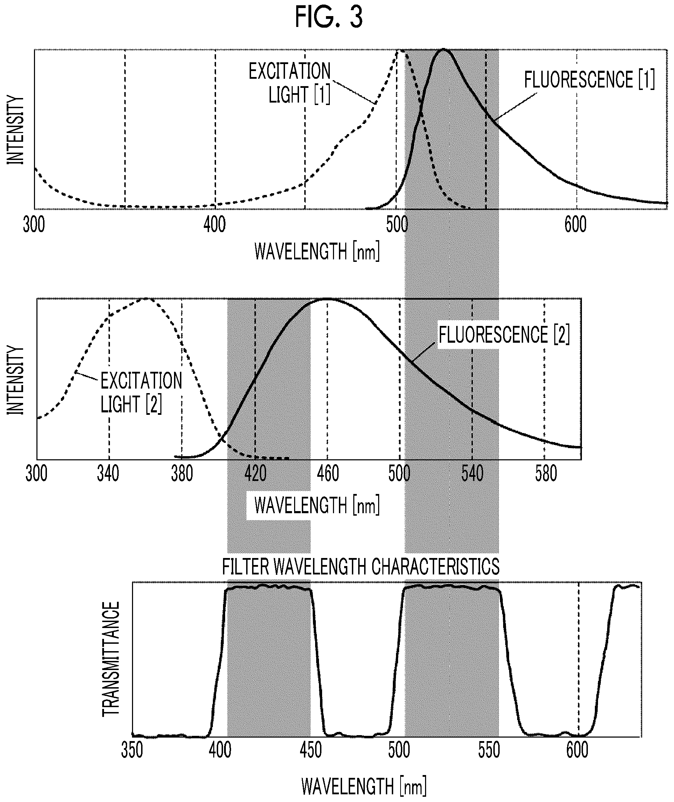

Here, the upper part of Fig. 3 shows a state in which the cell stained with the fluorescence by AO is irradiated with excitation light [1] having a peak wavelength of approximately 500 nm, and as a result, fluorescence [1] having a peak wavelength of approximately 526 nm is emitted from the cell. The middle part of Fig. 3 shows a state in which the cell stained with fluorescence by DAPI is irradiated with excitation light [2] having a peak wavelength of approximately 360 nm, and as a result, fluorescence [2] having a peak wavelength of approximately 460 nm is emitted from the cell. In a case where both the fluorescence [1] and the fluorescence [2] are to be observed in the observation apparatus 10, a multiband filter having, for example, the frequency characteristics shown in the lower part of Fig. 3 can be used as the filter 15. The multiband filter has a first transmission band in a wavelength range of 500 nm to 550 nm, which transmits the fluorescence [1] and blocks the excitation light [1], and a second transmission band in a wavelength range of 400 nm to 450 nm, which transmits the fluorescence [2] and blocks the excitation light [2]. In a case where fluorescence observation is not performed on the target particles 31, the filter 15 is not necessary.

The light transmitted through the filter 15 is incident on the imaging lens 16. The imaging lens 16 forms an image of the target particles 31, which is magnified by the objective lens 12, on an imaging surface of the imaging unit 17. The imaging unit 17 captures an image of the target particles 31 that is magnified by the objective lens 12 and imaged by the imaging lens 16, and outputs the image of the target particles 31. The imaging unit 17 may be a digital camera capable of capturing color images, which comprises an imaging element such as a complementary metal-oxide-semiconductor (CMOS) image sensor.

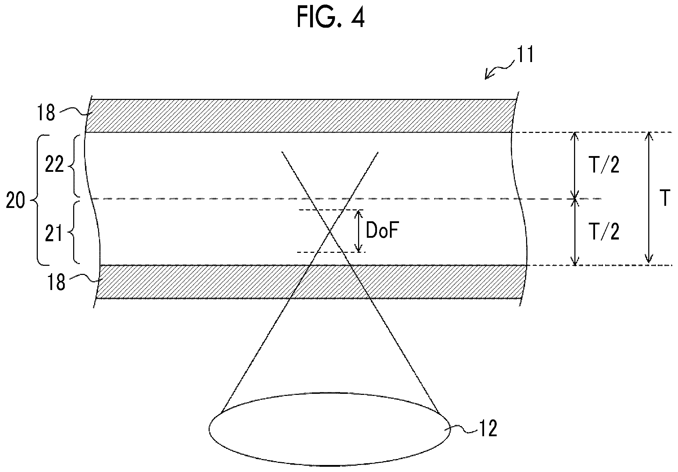

Fig. 4 is a diagram showing a relationship between a depth of field $DoF_i$ in the observation optical system 40 and a thickness of the target layer 21. As shown in Fig. 4, the depth of field $DoF_i$ of the observation optical system 40 is smaller than the thickness T/2 of the target layer 21. As a result, it is possible to avoid including the information on the non-target layer 22 in the image taken in by the observation optical system 40. As a result, it is possible to obtain an image including the image of the target particles 31 and not including the image of the non-target particles 32.

It is preferable that the objective lens 12 has a high magnification in order to satisfy $DoF_i < T/2$. As the magnification of the objective lens 12 increases, the depth of field $DoF_i$ can be decreased. On the other hand, in a case where the magnification of the objective lens 12 and the imaging lens 16 is low, the target particles 31 can be observed in a wider field of view. In a case where the number of target particles 31 is counted by sampling using the observation apparatus 10, as the magnification of the objective lens 12 and the imaging lens 16 is decreased, the number of target particles included in the field of view can be increased, and thus, a statistically accurate count value can be obtained. In order to achieve both reduction of the depth of field $DoF_i$ and increase of the imaging field of view, it is preferable that the objective lens 12 has a high magnification ($1\times$ or more) and the imaging lens 16 has a low magnification ($1\times$ or less). The magnification of the objective lens 12 may be, for example, $4\times$, and the magnification of the imaging lens 16 may be, for example, $0.5\times$.

As described above, the observation apparatus 10 according to the embodiment of the disclosed technology includes the holding unit 11 that holds the suspension 20 in a state of being separated into the target layer 21 including the target particles 31 and the non-target layer 22 including the non-target particles 32, the observation light source 13 that causes observation light to be incident from the side of the target layer 21, the objective lens 12 that is provided on the side of the target layer 21 and magnifies the image of the target particles 31, and the imaging unit 17 that captures the image of the target particles 31 magnified by the objective lens 12. In the observation apparatus 10, the depth of field $DoF_i$ of the observation optical system 40 including the objective lens 12 is smaller than the thickness T/2 of the target layer 21.

Here, the depth of field $DoF_i$ is represented by the following Expression (1).
[Expression 1]

$$DoF_i \approx \frac{DoF_o}{\alpha} = \frac{DoF_o}{\beta^2} = \frac{2 \cdot CoC \cdot F_{eff}}{\beta^2} \quad \cdots \quad (1)$$

In Expression (1), $DoF_o$ is a focal depth on the imaging unit side, $\alpha$ is a longitudinal magnification, $\beta$ is a lateral magnification, CoC is an allowable circle of confusion diameter, and $F_{eff}$ is an effective F number. For example, in the observation optical system 40, in a case where $F_{eff} = 3.85$, $CoC = 7.04\ \mu m$, and $\beta = 2$, $DoF_i = 13.5\ \mu m$ is obtained from Expression (1). In this case, in a case where the thickness T/2 of the target layer 21 is $50\ \mu m$, $DoF_i < T/2$ is satisfied, and thus, it is possible to observe only the target layer 21 among the target layer 21 and the non-target layer 22.

With the observation apparatus 10 according to the present embodiment, the target particles 31 are irradiated with observation light from the side of the target layer 21, and reflected light, fluorescence, or fluorophoreescence emitted from the target particles 31 is taken in by the observation optical system 40. On the other hand, the transmitted light transmitted through the non-target layer 22 is not taken in by the observation light source 13. As a result, it is possible to avoid including the information on the non-target layer 22 in the image taken in by the observation optical system 40. As a result, it is possible to obtain an image including the image of the target particles 31 and not including the image of the non-target particles 32. In addition, with the observation apparatus 10 according to the present embodiment, the depth of field $DoF_i$ of the observation optical system 40 is smaller than the thickness of the target layer 21. As a result, the effect of excluding the information of the non-target layer 22 can be promoted. Accordingly, it is possible to avoid the non-target particles 32 from being captured in the image output from the imaging unit 17.

As described above, with the observation apparatus 10 according to the present embodiment, it is possible to selectively observe the target particles as an observation target among two or more kinds of particles included in the suspension. For example, for a cell suspension containing cells and fat (oil droplets), it is possible to obtain an image containing cells and not containing fat. By counting the number of cells included in the cell suspension using an image including cells and not including fat, an accurate count value can be obtained. In addition, with the observation apparatus 10 according to the present embodiment, the centrifugation, which carries the risk of cell damage and cell loss, is unnecessary.

In the observation apparatus 10 according to the present embodiment, the observation light source 13 can output excitation light that excites the fluorophore introduced into the target particles 31. As a result, the target particles 31 can be observed by fluorescence, and a clearer image of the target particles 31 can be obtained.

The observation apparatus 10 according to the present embodiment may include the filter 15 that is provided between the objective lens 12 and the imaging unit 17, blocks a wavelength component of excitation light, and transmits a wavelength component of fluorescence emitted from the target particles 31. As a result, it is possible to prevent bleed-through of the excitation light.

In the observation apparatus 10 according to the present embodiment, an angle between the optical axis of the observation light and the optical axis of the objective lens is greater than 0° and smaller than 90°. That is, the optical axis of the observation light is not coaxial with the optical axis of the objective lens 12, and the observation light is incident from the side of the target layer 21. As a result, the degree of freedom in disposing the observation light source 13 is increased, and for example, the target layer 21 can be irradiated with the observation light from a short distance, so that it is possible to obtain a clearer image of the target particles 31.

In the observation apparatus 10 according to the present embodiment, the holding unit 11 has a pair of parallel flat plates having light transmittance and having main surfaces extending in the horizontal direction, and the suspension 20 is held between the pair of parallel flat plates. In general, the gas-liquid interface is a curved surface due to surface tension. In a case where the surface of the suspension is a curved surface, it is not easy to obtain a clear image of the target particles over the entire field of view. Since the holding unit 11 has a pair of parallel flat plates having light transmittance and having main surfaces extending in the horizontal direction, the surface of the suspension is a flat surface, and thus it is possible to obtain a clear image of the target particles over the entire field of view. In addition, the thickness of the target layer 21 can be made uniform.

In the observation apparatus 10 according to the present embodiment, the imaging lens 16 has a magnification of $1\times$ or less. Accordingly, it is possible to widen the imaging field of view while using the objective lens 12 having a high magnification. By using the objective lens 12 having a high magnification, the depth of field $DoF_i$ of the observation optical system 40 can be reduced, and it is possible to avoid including information on the non-target layer 22 in the image taken in by the observation optical system 40.

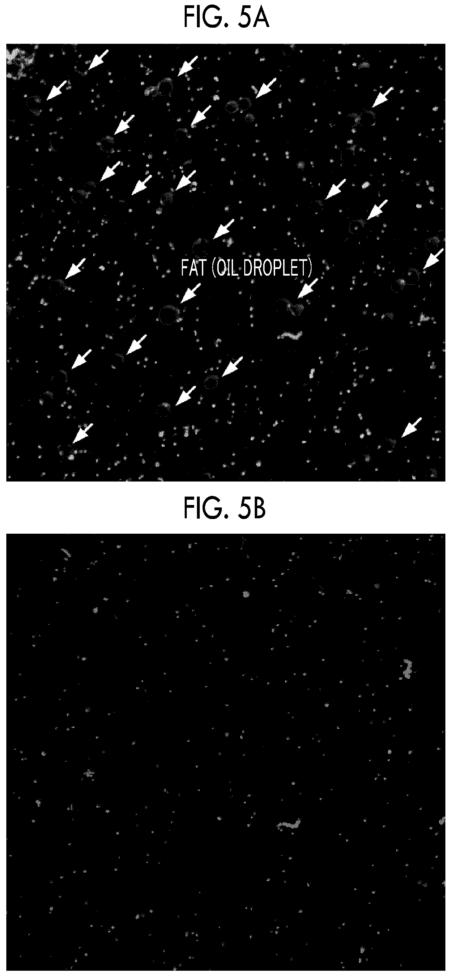

Fig. 5A is an image of cells included in a cell suspension, which is acquired by using an observation apparatus (not shown), according to the comparative example. In the comparative example, the treatment of separating the cells and the fat contained in the cell suspension was not performed. In addition, the observation apparatus according to the comparative example has a configuration in which the excitation light source is disposed on one side with the cell suspension interposed therebetween, and the objective lens is disposed on the other side. That is, the excitation light transmits through the cell suspension containing cells and fat and is incident on the objective lens. The cells are subjected to fluorescence staining. In the image acquired using the observation apparatus according to the comparative example, a plurality of fat particles (indicated by arrows in the drawing) are captured. In a case where the number of cells is counted using an image in which a plurality of fat particles are captured, an accurate count value cannot be obtained.

Fig. 5B is an image of cells included in a cell suspension acquired by using the observation apparatus 10 according to the embodiment of the disclosed technology. The cells are subjected to fluorescence staining. The observation light source 13 outputs excitation light for exciting the fluorophore introduced into the cell. After accommodating the cell suspension in the holding unit 11 and allowing the cell suspension to stand, the cell suspension was separated into the target layer containing cells and the non-target layer containing fat. In the image acquired by using the observation apparatus 10 according to the embodiment of the disclosed technology, no fat is captured. The number of cells can be counted using an image in which particles other than cells are not captured, and thus an accurate count value can be obtained.

It is preferable that the objective lens 12 has a variable focal length. The objective lens 12 may be configured to include an objective lens body and a variable focus lens. In a case where the depth of field $DoF_i$ of the observation optical system 40 is small, it is not easy to focus on the target particles, and in a case where the focal position of the objective lens 12 and the relative position of the target particles are fixed, it may not be possible to focus on the target particles depending on the tolerance of a distance T between the parallel flat plates in the holding unit 11. Therefore, it is desirable that the relative position between the focal position of the objective lens 12 and the target particles is variable. As a means for making the relative position between the focal position of the objective lens 12 and the target particles variable, it is considered to introduce a movable stage. However, in a case where the movable stage is introduced, the size of the apparatus increases. By using the objective lens having a variable focal length, it is possible to make the relative position between the focal position of the objective lens 12 and the target particles variable without increasing the size of the apparatus.

In the above description, a case where the target particles are cells and the non-target particles are fat has been exemplified, but the disclosed technology can be applied to any suspension including two or more kinds of particles having different relative magnitudes of specific gravity with respect to a liquid.

Second Embodiment

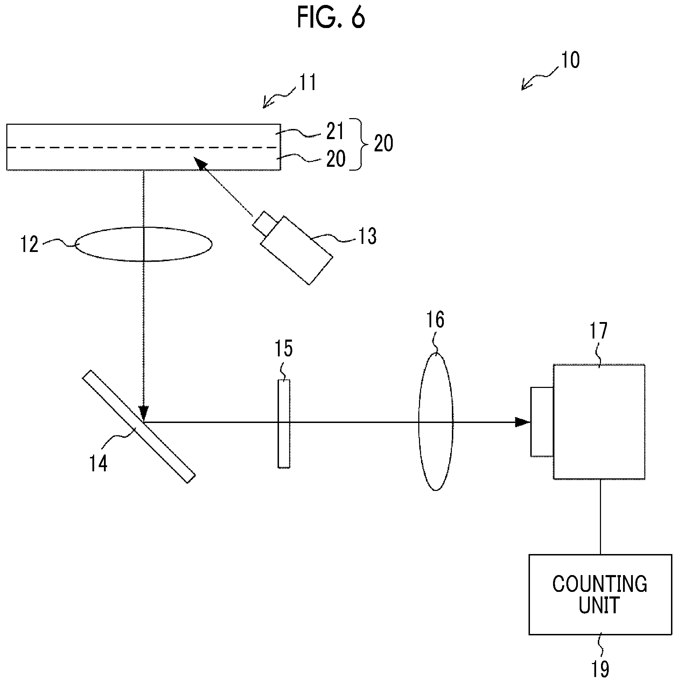

Fig. 6 is a diagram showing an example of a configuration of an observation apparatus 10A according to a second embodiment of the disclosed technology. The observation apparatus 10A according to the second embodiment is different from the observation apparatus 10 according to the first embodiment described above in that the observation apparatus 10A includes a counting unit 19. The counting unit 19 counts the number of target particles imaged by the imaging unit 17. Specifically, the counting unit 19 acquires the image output from the imaging unit 17, extracts the particle-like object from the acquired image, and outputs the count value of the number of the extracted objects. The counting unit 19 may output a density D (the number per unit volume) of the particles by performing a calculation represented by the following Equation (1). In Equation (1), S is a size of an image including particles as a detection target, T is a distance between parallel flat plates in the holding unit 11, and C is a count value of the number of particles. In addition, the counting unit 19 may output the total number A of particles by performing a calculation represented by the following Equation (2). In Equation (2), D is a density calculated based on Equation (1), and V is a volume of the suspension 20 held by the holding unit 11. The counting unit 19 is configured to include a computer that executes the above-described series of processing. Since the counting unit 19 counts the number of target particles based on the image in which the non-target particles output from the imaging unit 17 are not captured, an accurate count value can be obtained.

$$D=C/(S \times T) \dots (1)$$

$$A=D \times V \dots (2)$$

In regard to the first and second embodiments described above, the following supplementary notes will be further disclosed.

Supplementary Note 1

An observation apparatus comprising:

a holding unit that holds a suspension in a state of being separated into a target layer including target particles as an observation target among two or more kinds of particles included in the suspension and a non-target layer including particles other than the target particles among the two or more kinds of particles, the suspension including the two or more kinds of particles having different relative magnitudes of specific gravity with respect to a liquid;
an observation light source that causes observation light to be incident from a side of the target layer;
an objective lens that is provided on the side of the target layer and magnifies an image of the target particles; and
an imaging unit that captures the image of the target particles magnified by the objective lens,
wherein a depth of field of an optical system including the objective lens is smaller than a thickness of the target layer.

Supplementary Note 2
The observation apparatus according to Supplementary Note 1,
wherein the observation light source outputs excitation light for exciting a fluorophore introduced into the target particles.

Supplementary Note 3

The observation apparatus according to Supplementary Note 2, further comprising:
a filter that is provided between the objective lens and the imaging unit, blocks a wavelength component of the excitation light, and transmits a wavelength component of fluorescence emitted from the target particles.

Supplementary Note 4

The observation apparatus according to any one of Supplementary Notes 1 to 3,
wherein an angle between an optical axis of the observation light and an optical axis of the objective lens is greater than 0° and smaller than 90°.

Supplementary Note 5

The observation apparatus according to any one of Supplementary Notes 1 to 4,

wherein the holding unit includes a pair of parallel flat plates having light transmittance and having main surfaces extending in a horizontal direction, and
the suspension is held between the pair of parallel flat plates.

Supplementary Note 6

The observation apparatus according to any one of Supplementary Notes 1 to 5, further comprising:
an imaging lens that forms the image of the target particles magnified by the objective lens on an imaging surface of the imaging unit and has a magnification of $1\times$ or less.

Supplementary Note 7

The observation apparatus according to any one of Supplementary Notes 1 to 6, further comprising:
a counting unit that counts the number of the target particles imaged by the imaging unit.

Supplementary Note 8

The observation apparatus according to any one of Supplementary Notes 1 to 7,
wherein the target particles are cells.

Supplementary Note 9

An observation method comprising:

holding a suspension in a state of being separated into a target layer including target particles as an observation target among two or more kinds of particles included in the suspension and a non-target layer including particles other than the target particles among the two or more kinds of particles, the suspension including the two or more kinds of particles having different relative magnitudes of specific gravity with respect to a liquid;
causing observation light to be incident from a side of the target layer;
magnifying an image of the target particles with an objective lens that is provided on the side of the target layer; and
capturing the image of the target particles magnified by the objective lens,
wherein a depth of field of an optical system including the objective lens is smaller than a thickness of the target layer.

Supplementary Note 10

The observation method according to Supplementary Note 9,
wherein the target particles are cells.

Explanation of References

10, 10A: observation apparatus
11: holding unit
12: objective lens
13: observation light source
14: mirror
15: filter
16: imaging lens
17: imaging unit
18: parallel flat plate
19: counting unit
20: suspension
21: target layer
22: non-target layer
30: liquid
31: target particle
32: non-target particle
40: observation optical system

**Claims**

1.  An observation apparatus comprising:

a holding unit that holds a suspension in a state of being separated into a target layer including target particles as an observation target among two or more kinds of particles included in the suspension and a non-target layer including particles other than the target particles among the two or more kinds of particles, the suspension including the two or more kinds of particles having different relative magnitudes of specific gravity with respect to a liquid;

an observation light source that causes observation light to be incident from a side of the target layer;

an objective lens that is provided on the side of the target layer and magnifies an image of the target particles; and

an imaging unit that captures the image of the target particles magnified by the objective lens,

wherein a depth of field of an optical system including the objective lens is smaller than a thickness of the target layer.

2. The observation apparatus according to claim 1,

wherein the observation light source outputs excitation light for exciting a fluorophore introduced into the target particles.

3. The observation apparatus according to claim 2, further comprising:

a filter that is provided between the objective lens and the imaging unit, blocks a wavelength component of the excitation light, and transmits a wavelength component of fluorescence emitted from the target particles.

4. The observation apparatus according to any one of claims 1 to 3,

wherein an angle between an optical axis of the observation light and an optical axis of the objective lens is greater than 0° and smaller than 90°.

5. The observation apparatus according to any one of claims 1 to 4,

wherein the holding unit includes a pair of parallel flat plates having light transmittance and having main surfaces extending in a horizontal direction, and

the suspension is held between the pair of parallel flat plates.

6. The observation apparatus according to any one of claims 1 to 5, further comprising:

an imaging lens that forms the image of the target particles magnified by the objective lens on an imaging surface of the imaging unit and has a magnification of $1\times$ or less.

7. The observation apparatus according to any one of claims 1 to 6, further comprising:

a counting unit that counts the number of the target particles imaged by the imaging unit.

8. The observation apparatus according to any one of claims 1 to 7,

wherein the target particles are cells.

9. An observation method comprising:

holding a suspension in a state of being separated into a target layer including target particles as an observation target among two or more kinds of particles included in the suspension and a non-target layer including particles other than the target particles among the two or more kinds of particles, the suspension including the two or more kinds of particles having different relative magnitudes of specific gravity with respect to a liquid;

causing observation light to be incident from a side of the target layer;

magnifying an image of the target particles with an objective lens that is provided on the side of the target layer; and

capturing the image of the target particles magnified by the objective lens,

wherein a depth of field of an optical system including the objective lens is smaller than a thickness of the target layer.

10. The observation method according to claim 9,

wherein the target particles are cells.

# FIG. 1

# FIG. 2

# FIG. 3

## FIG. 4

## FIG. 5A

FAT (OIL DROPLET)

## FIG. 5B

# FIG. 6

Europäisches
Patentamt

European
Patent Office

Office européen
des brevets

# EUROPEAN SEARCH REPORT

**Application Number**

EP 25 18 9836

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/042507 A1 (TURNER RICHARD H [US]) 11 February 2016 (2016-02-11) | 1-8 | INV. G01N15/04 |
| Y | * paragraphs [0010] - [0212]; figures 1-8 * | 9,10 | G01N15/10 G01N15/14 G01N15/1434 |
| X,P | WO 2025/117626 A1 (IDEXX LAB INC [US]) 5 June 2025 (2025-06-05) * paragraphs [0004] - [0115]; figures 1-15 * | 1,5,7,9, 10 | |
| Y | US 2024/044773 A1 (KAMEI SHOTA [JP] ET AL) 8 February 2024 (2024-02-08) * paragraphs [0005] - [0270]; figures 1-4 * | 9,10 | |
| A | US 2016/208306 A1 (POLLAK JOSEPH JOEL [IL] ET AL) 21 July 2016 (2016-07-21) * the whole document * | 1-10 | |
| A | US 2012/120221 A1 (DONG XIAO XIAO [CN] ET AL) 17 May 2012 (2012-05-17) * the whole document * | 1-10 | **TECHNICAL FIELDS SEARCHED (IPC)** G01N |

The present search report has been drawn up for all claims

| Place of search | Date of completion of the search | Examiner |
|---|---|---|
| The Hague | 4 December 2025 | Ionescu, C |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 18 9836

This annex lists the patent family members relating to the patent documents cited in the above-mentioned European search report.
The members are as contained in the European Patent Office EDP file on
The European Patent Office is in no way liable for these particulars which are merely given for the purpose of information.

04-12-2025

| Patent document cited in search report | | Publication date | Patent family member(s) | | Publication date |
|---|---|---|---|---|---|
| US 2016042507 | A1 | 11-02-2016 | AU | 2014229420 A1 | 24-09-2015 |
| | | | BR | 112015023081 A2 | 18-07-2017 |
| | | | CA | 2905564 A1 | 18-09-2014 |
| | | | CN | 105492887 A | 13-04-2016 |
| | | | EA | 201591800 A1 | 29-04-2016 |
| | | | EP | 2973408 A2 | 20-01-2016 |
| | | | JP | 2016522880 A | 04-08-2016 |
| | | | SG | 10201707599W A | 30-10-2017 |
| | | | SG | 11201506786V A | 29-09-2015 |
| | | | US | 2016042507 A1 | 11-02-2016 |
| | | | WO | 2014141034 A2 | 18-09-2014 |
| WO 2025117626 | A1 | 05-06-2025 | US | 2025182274 A1 | 05-06-2025 |
| | | | US | 2025182275 A1 | 05-06-2025 |
| | | | WO | 2025117625 A1 | 05-06-2025 |
| | | | WO | 2025117626 A1 | 05-06-2025 |
| US 2024044773 | A1 | 08-02-2024 | AU | 2022263866 A1 | 09-11-2023 |
| | | | CN | 117203525 A | 08-12-2023 |
| | | | EP | 4317970 A1 | 07-02-2024 |
| | | | JP | WO2022230672 A1 | 03-11-2022 |
| | | | KR | 20230159871 A | 22-11-2023 |
| | | | TW | 202248634 A | 16-12-2022 |
| | | | US | 2024044773 A1 | 08-02-2024 |
| | | | WO | 2022230672 A1 | 03-11-2022 |
| US 2016208306 | A1 | 21-07-2016 | CN | 105556276 A | 04-05-2016 |
| | | | CN | 109342155 A | 15-02-2019 |
| | | | DK | 3017286 T3 | 30-05-2022 |
| | | | EP | 3017286 A1 | 11-05-2016 |
| | | | ES | 2921498 T3 | 26-08-2022 |
| | | | PL | 3017286 T3 | 16-08-2022 |
| | | | SI | 3017286 T1 | 31-08-2022 |
| | | | US | 2015316477 A1 | 05-11-2015 |
| | | | US | 2016208306 A1 | 21-07-2016 |
| | | | US | 2019002950 A1 | 03-01-2019 |
| | | | US | 2022390734 A1 | 08-12-2022 |
| | | | WO | 2015001553 A1 | 08-01-2015 |
| US 2012120221 | A1 | 17-05-2012 | CN | 102053051 A | 11-05-2011 |
| | | | CN | 102472703 A | 23-05-2012 |
| | | | EP | 2427750 A1 | 14-03-2012 |
| | | | JP | 5496330 B2 | 21-05-2014 |
| | | | JP | 2012531608 A | 10-12-2012 |
| | | | US | 2012120221 A1 | 17-05-2012 |
| | | | WO | 2011051134 A1 | 05-05-2011 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 25 18 9836

This annex lists the patent family members relating to the patent documents cited in the above-mentioned European search report.
The members are as contained in the European Patent Office EDP file on
The European Patent Office is in no way liable for these particulars which are merely given for the purpose of information.

04-12-2025

| Patent document cited in search report | Publication date | Patent family member(s) | Publication date |
|---|---|---|---|

EPO FORM P0459

For more details about this annex : see Official Journal of the European Patent Office, No. 12/82

page 2 of 2

**REFERENCES CITED IN THE DESCRIPTION**

**Patent documents cited in the description**

- JP 2012021828 A
- JP 2006094783 A
- JP 63233371 A
- JP S63233371 A